# EUROPEAN PATENT APPLICATION

(11) **EP 3 121 692 A1**
(43) Date of publication of application: **25.01.2017**
(21) Application number: 15764878.3
(22) Date of filing: 17.02.2015
(51) Int. Cl.: G06F 3/041, G06F 3/044

(54) **POSITION DETECTION DEVICE**

(30) Priority: 17.03.2014 JP 2014053505; 18.04.2014 JP 2014086269
(71) Applicant: Wacom Co., Ltd., Kazo-shi, Saitama 349-1148 (JP)
(72) Inventor: KATSURAHIRA Yuji, Kazo-shi Saitama 349-1148 (JP); CHAO Katsu, Kazo-shi Saitama 349-1148 (JP)
(74) Representative: Appelt, Christian W.
(86) International application number: PCT/JP2015/054209
(87) International publication number: WO 2015/141349

(57) **Abstract**

A position detecting device that can accurately detect and input the coordinate position of a stylus without being affected by noise emitted by a display device capable of refreshing displaying at every certain cycle is provided.

The position detecting device includes a noise sensor disposed around a display device or a drive circuit of the display device, a noise detecting circuit that outputs noise detection information when noise input to this noise sensor is equal to or higher than a predetermined level, a pulse generating circuit that generates a pulse at the same cycle as the known cycle of a horizontal synchronizing pulse of the display device, phase control means that controls the phase of the output pulse of the pulse generating circuit in such a manner that the frequency at which the noise detection information is output in a predetermined time synchronizing with the output pulse of the pulse generating circuit becomes equal to or higher than a certain value, and a receiving circuit that receives a signal by a finger or a stylus in synchronization with the timing of the output pulse of the pulse generating circuit.

## Description

### Technical Field

The present invention relates to a transparent position detecting device that is disposed over the front surface of a display device and to which input by a finger or a stylus can be made.

### Background Art

In recent years, tablet information terminals equipped with a touch panel have come to be frequently used. Among devices of this kind are ones that allow input by a stylus for easy execution of handwriting character input and drawing of a picture, an illustration, and so forth, which are difficult with a finger. As a pen input technique for this purpose, a method disclosed in patent document 1 has been widely used.

According to the method of patent document 1 (Japanese Patent Laid-Open No. Sho 63-70326), a position indicator that is a stylus is provided with a resonant circuit and an indicated position is detected by electromagnetic induction with a tablet. However, a sensor plate configuring the tablet needs to be provided under the back surface of a display device. This causes problems that the structure of the device becomes complicated because a certain level of current needs to be made to flow through loop coils configuring the sensor plate and that the position detection is susceptible to the influence of noise from the display device and the coordinate position cannot be stably detected.

According to the position input device and computer system disclosed in patent document 2 (Japanese Patent Laid-Open No. 2007-164356) by the same applicant as patent document 1, making a tablet sensor transparent and disposing the tablet sensor over the whole surface of a display device are enabled by equipping a stylus with an electrical double-layer capacitor. However, in the invention disclosed in this patent document 2, the fact remains that the position detection is affected by noise emitted by the display device, and the coordinate position cannot be stably obtained.

In patent document 3 (JP-T-2005-537570), a transparent digitizer is disclosed that obtains the position indicated by a stylus by signals from differential amplifiers arranged in association with the respective electrodes of a transparent sensor disposed over a display device. According to the transparent digitizer of this patent document 3, two electrodes are simultaneously selected from the transparent sensor to detect the difference in the signal. Thus, the position detection is less susceptible to the influence of external noise.

Furthermore, in patent document 4 (Japanese Patent Laid-Open No. Hei 6-337752), a coordinate detecting device is disclosed that is provided with an analog multiplexer to select two electrode lines from electrode lines of a tablet and differentially amplifies signals from the two electrode lines selected by the analog multiplexer to exclude the influence of external noise.

### Prior Art Documents

### Patent Documents

Patent Document 1: Japanese Patent Laid-Open No. Sho 63-70326
Patent Document 2: Japanese Patent Laid-Open No. 2007-164356
Patent Document 3: JP-T-2005-537570
Patent Document 4: Japanese Patent Laid-Open No. Hei 6-337752

### Summary of Invention

### Technical Problem

In an input device that is integrated with a display device and is transparent, the resistance value of an electrically-conductive material forming the electrodes is high and the display device itself generates strong noise. Thus, it is difficult to stably obtain the coordinate position of a stylus.

In the inventions disclosed in patent document 3 and patent document 4, to solve this problem, external noise is canceled by simultaneously selecting two electrodes and detecting the difference in the signal by using the differential amplifier.

However, the noise generated by the display device such as a liquid crystal panel is extremely strong compared with a signal transmitted from the stylus. Therefore, it is difficult to sufficiently exclude the influence of the noise by only using the differential amplifier.

An object of the present invention is to provide a position detecting device that can accurately detect and input the coordinate position of a finger or a stylus by using a transparent sensor disposed integrally with a display device without being affected by noise emitted by the display device.

### Technical Solution

To achieve the above-described object, the present invention proposes a position detecting device that detects a position indicated by a finger or a stylus over a display device capable of refreshing displaying at every certain cycle. The position detecting device is characterized by being provided with a noise detecting circuit that is provided with a noise sensor to detect noise around the display device or around a drive circuit of the display device and outputs noise detection information when noise detected by the noise sensor is equal to or higher than a predetermined level, a pulse generating circuit that generates a pulse at the same cycle as the known cycle of a horizontal synchronizing pulse of the display device, phase control means that controls the phase of the pulse output by the pulse generating circuit in such a manner that frequency at which the noise detection information from the noise detecting circuit is output in a predetermined time synchronizing with the pulse output by the pulse generating circuit becomes equal to or higher than a certain value, and a receiving circuit that receives a signal by the finger or the stylus in synchronization with the timing of the pulse output by the pulse generating circuit.

It is preferable to configure the phase control means as follows in the above-described position detecting device. Specifically, the phase control means is configured to output advancing information when timing at which the noise detection information from the noise detecting circuit is output appears earlier than the timing of the pulse output by the pulse generating circuit by a difference within a certain time, and output retarding information when the timing at which the noise detection information from the noise detecting circuit is output appears later than the timing of the pulse output by the pulse generating circuit by a difference within a certain time, and is configured to adjust the cycle of the pulse generating circuit to a slightly-shorter cycle if the frequency of appearance of the advancing information is higher than the frequency of appearance of the retarding information, and adjust the cycle of the pulse generating circuit to a slightly-longer cycle if the frequency of appearance of the retarding information is higher than the frequency of appearance of the advancing information.

Furthermore, the following configuration is proposed as the above-described phase control means. Specifically, the phase control means is configured to carry out the phase control of the pulse from the pulse generating circuit by dividing the predetermined time into two periods of a former-half period and a latter-half period and outputting the advancing information when the noise detection information from the noise detecting circuit is output in the former-half period and outputting the retarding information when the noise detection information from the noise detecting circuit is output in the latter-half period.

Moreover, the following configuration is proposed as another method of the phase control means. Specifically, the pulse generating circuit outputs a pulse with the same time width at the same timing as the predetermined time. In addition, the phase control means is configured to carry out the phase control of the pulse from the pulse generating circuit in such a manner as to output the advancing information when the noise detection information from the noise detecting circuit appears at a rising edge of the pulse output by the pulse generating circuit and output the retarding information when the noise detection information from the noise detecting circuit appears at a falling edge of the pulse output by the pulse generating circuit.

### Advantageous Effect

According to the present invention, noise generated by the display device is detected and the pulse generating circuit that operates at a cycle corresponding to the horizontal synchronous frequency of the horizontal synchronizing pulse of the display device known in advance is provided. Furthermore, control is carried out to cause the timing of the pulse output by the pulse generating circuit to correspond with the timing of the noise generated by the display device, and signal detection is carried out in synchronization with the pulse output by the pulse generating circuit. Therefore, the coordinate position by the stylus or the finger can be accurately detected and input without being affected by the noise generated by the display device.

### Brief Description of Drawings

[FIG. 1] FIG. 1 is a configuration diagram of a first embodiment of a position detecting device according to the present invention.
[FIG. 2] FIG. 2 is a diagram showing the received signal waveforms of the respective parts in FIG. 1 and the timing of analog-to-digital (AD) conversion operation.
[FIG. 3] FIG. 3 is a diagram showing the specific circuit configuration of a phase control circuit configuring the first embodiment of the position detecting device according to the present invention.
[FIG. 4] FIG. 4 is diagrams showing examples of the signal waveforms of the respective parts in the phase control circuit of the example of FIG. 3.
[FIG. 5] FIG. 5 is a diagram showing part of a flowchart of a program in a central processing unit (CPU) 27 configuring the first embodiment of the position detecting device according to the present invention.
[FIG. 6] FIG. 6 is a diagram showing a continuation of the flowchart of the program in the CPU 27 in FIG. 5.
[FIG. 7] FIG. 7 is a diagram showing another example of the phase control circuit configuring the first embodiment of the position detecting device according to the present invention.
[FIG. 8] FIGS. 8 is diagrams showing examples of the signal waveforms of the respective parts in the other example of the phase control circuit as the example of FIG. 7.
[FIG. 9] FIG. 9 is a diagram showing part of a flowchart of a program in a CPU 27a in the example of FIG. 7.
[FIG. 10] FIG. 10 is a diagram showing a continuation of the flowchart of the program in the CPU 27a in FIG. 9.
[FIG. 11] FIG. 11 is a diagram for explaining another example of a noise sensor in the position detecting device according to the first embodiment of the present invention.
[FIG. 12] FIG. 12 is a configuration diagram of a position detecting device according to a second embodiment of the present invention.
[FIG. 13] FIG. 13 is a diagram showing another configuration example of the first embodiment of the position detecting device according to the present invention.
[FIG. 14] FIG. 14 is a diagram showing a configuration example of a unit including the embodiment of the position detecting device according to the present invention.
[FIG. 15] FIG. 15 is diagrams showing configuration examples of the noise sensor in the embodiment of the position detecting device according to the present invention.
[FIG. 16] FIG. 16 is a diagram showing a configuration example of a display device used in the unit of the example of FIG. 14.

### Modes for Carrying Out the Invention

### First Embodiment

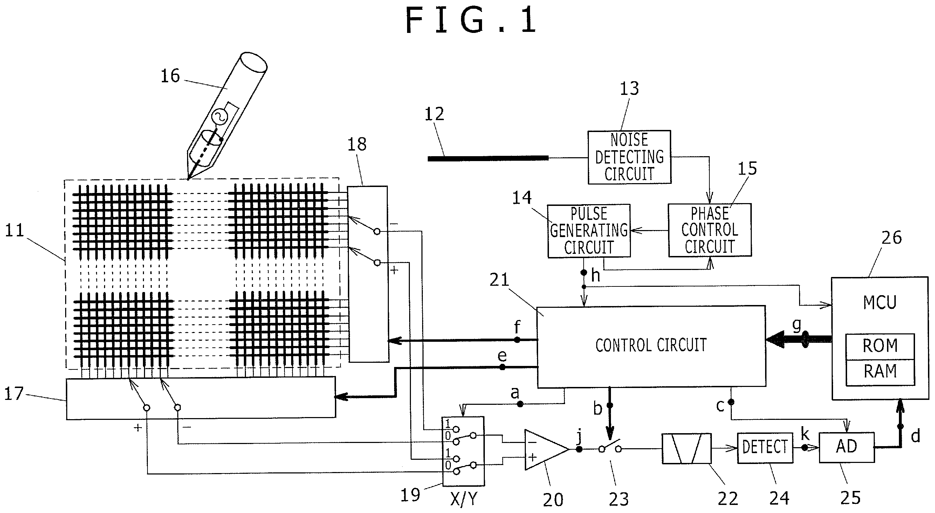

FIG. 1 is a configuration diagram of a first embodiment of a position detecting device according to the present invention. In FIG. 1, numeral 11 denotes a transparent sensor, and X electrodes made by arranging plural indium tin oxide (ITO) lines in the X-axis direction of the X and Y coordinates of the transparent sensor 11 and Y electrodes made by arranging plural ITO lines in the Y-axis direction of the X and Y coordinates are provided. The transparent sensor 11 is disposed integrally with a liquid crystal display (LCD) panel, not shown in the diagram, and the position detection area of the transparent sensor 11 just overlaps with the display area of the LCD panel. The X electrodes and the Y electrodes over the transparent sensor 11 are connected to a printed board, not shown in the diagram, via a flexible board, not shown in the diagram, by an anisotropic conductive film (ACF) connection.

Numeral 12 denotes a noise detecting electrode as an example of a noise sensor provided outside the position detection area of the transparent sensor 11 and the noise detecting electrode 12 is connected to the printed board via the above-described flexible board. The noise detecting electrode 12 may be provided along the longer sides and shorter sides of the transparent sensor 11 as shown by a dotted line in FIG. 1 or may be extended into an L-shape. In this case, one or both of the longer side and shorter side in the L-shaped extended part of the noise detecting electrode 12 may overlap with the position detection area of the transparent sensor 11.

Numeral 13 denotes a noise detecting circuit formed by an amplification circuit and a comparator. This noise detecting circuit 13 is connected to the noise detecting electrode 12 and sets the output to the high level when a noise voltage induced to the noise detecting electrode 12 surpasses a predetermined level. In the present embodiment, because the transparent sensor 11 is formed integrally with the LCD panel, the output as the high level from the noise detecting circuit 13 is mainly attributed to noise from the LCD panel. Furthermore, in many cases, strong noise is generated also in the X electrodes and the Y electrodes of the transparent sensor 11 at the same timing as the noise detected from the noise detecting circuit 13.

Numeral 14 denotes a pulse generating circuit and it is a circuit that continuously generates a pulse of the same cycle as the cycle of the horizontal synchronizing pulse of the LCD panel. Most of the noise from the LCD panel is generated at the same cycle as the cycle of the horizontal synchronizing pulse. In the present embodiment, it is assumed that the cycle of the horizontal synchronizing pulse of the LCD panel (horizontal synchronous frequency) is known in advance.

Numeral 15 denotes a phase control circuit and it controls the phase of the pulse output from the pulse generating circuit 14 so that the pulse output from the pulse generating circuit 14 may correspond with the timing of the noise detected by the noise detecting circuit 13.

Numeral 16 denotes a stylus and a signal of a constant frequency is supplied between an electrode at the tip part and a peripheral electrode surrounding it. Due to capacitive coupling between the stylus 16 and the transparent sensor 11, a signal is generated in the X electrodes and the Y electrodes of the transparent sensor 11.

Numeral 17 denotes an X selecting circuit that is connected to the X electrodes of the transparent sensor 11 and selects two pairs of electrodes from the X electrodes as a positive terminal and a negative terminal, and numeral 18 denotes a Y selecting circuit that is connected to the Y electrodes of the transparent sensor 11 and selects two pairs of electrodes from the Y electrodes as a positive terminal and a negative terminal.

Numeral 19 denotes a switching circuit and it selects either the positive terminal and the negative terminal selected by the X selecting circuit 17 or the positive terminal and the negative terminal selected by the Y selecting circuit 18 and connects the selected terminals to a differential amplification circuit 20. Specifically, when the X-axis coordinate of the position indicated by the stylus 16 is obtained, a control signal a from a control circuit 21 is set to the low level "0" to select the side of the X selecting circuit 17. Furthermore, when the Y-axis coordinate of the position indicated by the stylus 15 is obtained, the control signal a is set to the high level "1" to select the side of the Y selecting circuit 18. In this case, the positive terminal side of the X selecting circuit 17 or the Y selecting circuit 18 is connected to a non-inverting input terminal (positive side) of the differential amplification circuit 20 and the negative terminal side of the X selecting circuit 17 or the Y selecting circuit 18 is connected to an inverting input terminal (negative side) of the differential amplification circuit 20.

Numeral 22 denotes a band-pass filter circuit having a predetermined bandwidth centered at the frequency of the signal output by the stylus 16 and an output signal from the differential amplification circuit 20 is supplied to the band-pass filter circuit 22 via a switch 23. The switch 23 is controlled to the on- or off-state by a control signal b from the control circuit 21. Specifically, when the control signal b is at the high level "1," the switch 23 is set to the on-state and the output signal from the differential amplification circuit 20 is supplied to the band-pass filter circuit 22. When the control signal b is at the low level "0," the switch 23 is set to the off-state and the output signal from the differential amplification circuit 20 is not supplied to the band-pass filter circuit 22.

An output signal of the band-pass filter circuit 22 is subjected to detection by a detection circuit 24 and is converted to a digital value by an analog-digital conversion circuit (hereinafter, abbreviated as the AD conversion circuit) 25 based on a control signal c from the control circuit 21. Digital data d from this AD conversion circuit 25 is read and processed by a microprocessor 26 (MCU).

The control circuit 21 supplies a control signal e to the X selecting circuit 17 and thereby the X selecting circuit 17 selects two pairs of X electrodes as the positive terminal and the negative terminal. Furthermore, the control circuit 21 supplies a control signal f to the Y selecting circuit 18 and thereby the Y selecting circuit 18 selects two pairs of Y electrodes as the positive terminal and the negative terminal.

Numeral 26 denotes an MCU and it internally includes a read-only memory (ROM) and a random access memory (RAM) and operates by a program stored in the ROM.

The microprocessor 26 internally includes the ROM and the RAM and operates by the program stored in the ROM.

The microprocessor 26 outputs a control signal g based on the program stored in the ROM to control the control circuit 21 so that the control circuit 21 may output the control signals a to f at predetermined timings.

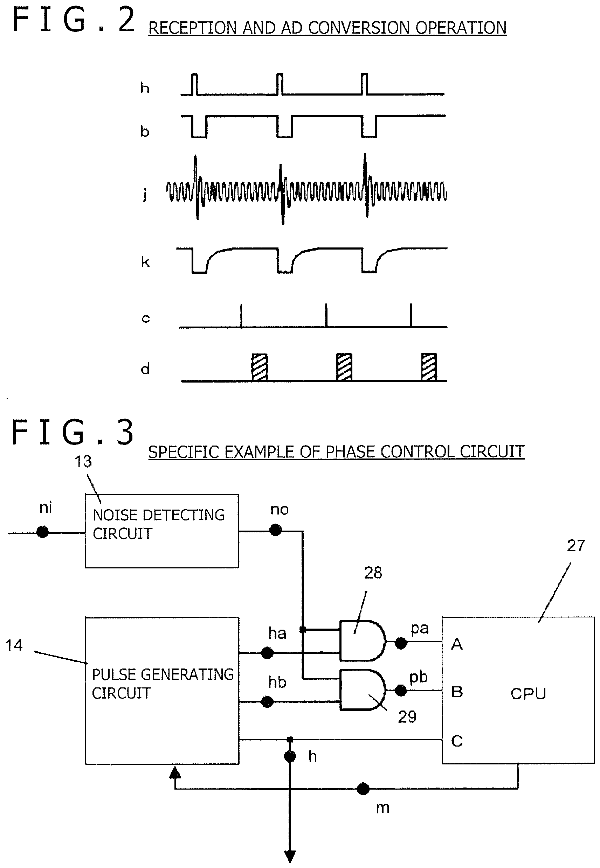

A pulse h output from the pulse generating circuit 14 is supplied to the control circuit 21 and the microprocessor 26 and the overall operation is carried out at the cycle of the pulse h, i.e. the horizontal synchronizing pulse (horizontal synchronous frequency) of the LCD panel. FIG. 2 is a diagram showing the received signal waveforms and the timing of AD conversion operation in the state in which the X selecting circuit 17 or the Y selecting circuit 18 selects electrodes close to the stylus 16. In FIG. 2, h, b, j, k, c, and d are signal waveforms at the places indicated by the same symbols in FIG. 1. The character "j" is the output signal waveform of the differential amplification circuit 20 and k is the output signal waveform of the detection circuit 24. A signal transmitted from the stylus 16 appears in the output j of the differential amplification circuit 20. However, strong noise from the LCD panel is generated at the timing of the pulse h output from the pulse generating circuit 14. Executing signal detection (AD conversion) with avoidance of this noise from the LCD panel is a characteristic of the present embodiment.

Specifically, the switch 23 is turned off at timings synchronizing with the pulse h and thereby the noise appearing in the output of the differential amplification circuit 20 is not input to the band-pass filter circuit 22. Thus, the conversion result d by the AD conversion circuit 25 is not affected by the noise.

In the present embodiment, in the state in which the switching circuit 19 selects the X side, the electrodes selected by the X selecting circuit 17 are sequentially switched at the timings of the above-described pulse h and signal detection is carried out. Then, the X coordinate of the position indicated by the stylus 16 is obtained from the distribution of the conversion result d by the AD conversion circuit 25. Furthermore, in the state in which the switching circuit 19 selects the Y side, the electrodes selected by the Y selecting circuit 18 are sequentially switched at the timings of the above-described pulse h and signal detection is carried out. Then, the Y coordinate of the position indicated by the stylus 16 is obtained from the distribution of the conversion result d by the AD conversion circuit 25.

Then, a description will be made about how the above-described phase control circuit 15 causes the timing of the pulse output from the pulse generating circuit 14 to correspond with the timing of the noise detected by the noise detecting circuit 13.

FIG. 3 is a diagram showing a specific circuit configuration of the phase control circuit 15 in FIG. 1. In FIG. 3, the noise detecting circuit 13 and the pulse generating circuit 14 are the same as those in FIG. 1. Numeral 27 denotes a CPU and numerals 28 and 29 denote AND gates.

An output signal no from the noise detecting circuit 13 is supplied in common to one input terminal of each of the AND gates 28 and 29. To the other input terminal of the AND gate 28, a signal ha output as the high level in the period equivalent to the former half of the above-described pulse h output from the pulse generating circuit 14 is supplied. To the other input terminal of the AND gate 29, a signal hb output as the high level in the period equivalent to the latter half of the pulse h output from the pulse generating circuit 14 is supplied.

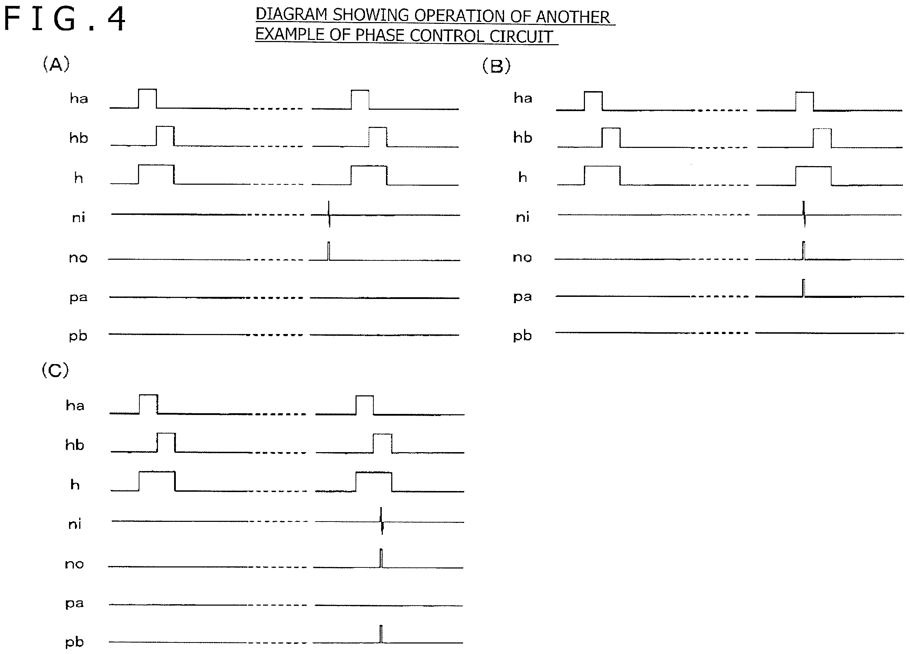

In the CPU 27, interrupt input terminals A, B, and C are provided. An output signal pa from the AND gate 28 is supplied to the interrupt input terminal A. An output signal pb from the AND gate 29 is supplied to the interrupt input terminal B. The pulse h output from the pulse generating circuit 14 is supplied to the interrupt input terminal C. The CPU 27 is so programmed that predetermined interrupt processing operation is carried out every time a rising edge of the signals input to the respective interrupt input terminals A, B, and C is generated. FIG. 4 shows examples of the signal waveforms of the respective parts shown in the phase control circuit of FIG. 3.

In FIG. 4, the following signals are shown: the pulse h of the horizontal cycle from the pulse generating circuit 14, the pulse ha whose pulse width period is the former-half period of the pulse width period of this pulse h, the pulse hb whose pulse width period is the latter-half period of the pulse width period of the pulse h, an input signal ni of the noise detecting circuit 13, the output signal no, the output signal pa of the AND gate 28, and the output signal pb of the AND gate 29.

FIG. 4(A) is the case in which the output signal (noise) no from the noise detecting circuit 13 appears in a period other than the pulse width period of the output pulse h from the pulse generating circuit 14. Mainly the noise appears before the operation of the phase control circuit becomes the steady state immediately after the position detecting device is activated.

FIG. 4(B) shows the case in which the output signal no from the noise detecting circuit 13 appears in the former-half period of the pulse width period of the output pulse h from the pulse generating circuit 14 (pulse width period of the pulse ha). Furthermore, FIG. 4(C) shows the case in which the output signal no from the noise detecting circuit 13 appears in the latter-half period of the pulse width period of the output pulse h from the pulse generating circuit 14 (pulse width period of the pulse hb).

In the phase control circuit, the CPU 27 controls the phase of the pulse h output by the pulse generating circuit 14 in such a manner that the frequency at which the output signal no (noise detection information) from the noise detecting circuit 13 is output in a predetermined time synchronizing with the pulse h output by the pulse generating circuit 14, in this example, in the pulse width period of the pulse h, becomes equal to or higher than a certain value.

More specifically, when the timing at which the output signal no (noise detection information) from the noise detecting circuit 13 is output appears earlier than the timing of the pulse h output by the pulse generating circuit 14 by a difference within a certain time, the CPU 27 outputs advancing information to the pulse generating circuit 14 as a control signal m. When the timing at which the noise detection information from the noise detecting circuit 13 is output appears later than the timing of the pulse h output by the pulse generating circuit 14 by a difference within a certain time, the CPU 27 outputs retarding information to the pulse generating circuit 14 as the control signal m. Thereby, when the frequency of the appearance of the advancing information is higher than the frequency of the appearance of the retarding information, the cycle of the pulse h output by the pulse generating circuit 14 is adjusted to be slightly shorter. When the frequency of the appearance of the retarding information is higher than the frequency of the appearance of the advancing information, the cycle of the pulse h output by the pulse generating circuit 14 is adjusted to be slightly longer.

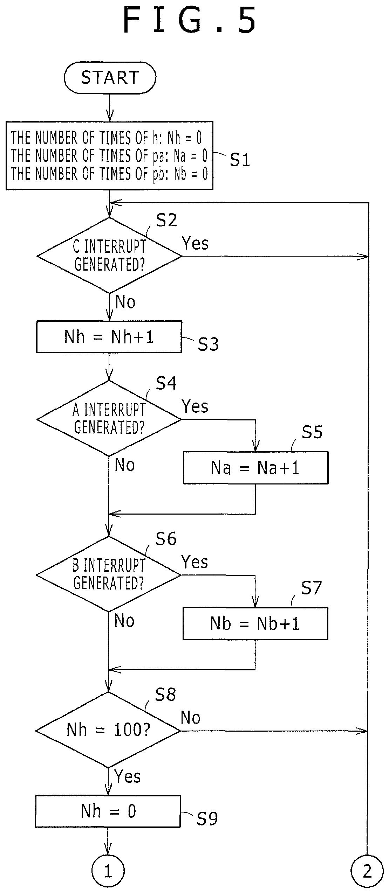

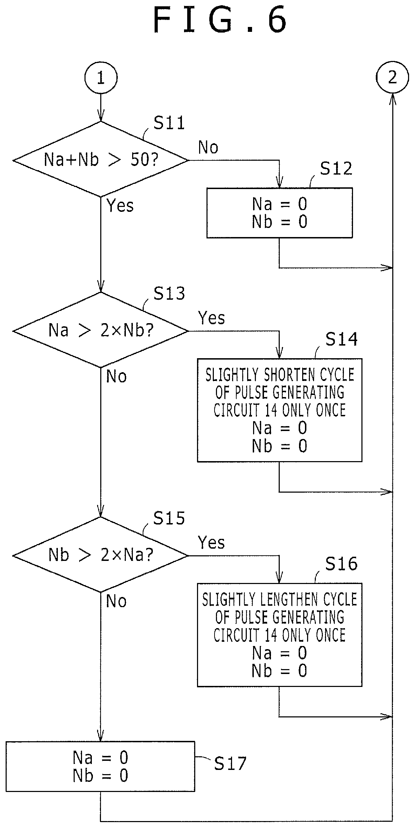

FIG. 5 and FIG. 6, which is a continuation of FIG. 5, show a flowchart of a program in the CPU 27. When the position detecting device is powered up, the CPU 27 clears all of the values of the number Nh of times of interrupt generation by the interrupt input terminal C, the number Na of times of interrupt generation by the interrupt input terminal A, and the number Nb of times of interrupt generation by the interrupt input terminal B (step S1).

Next, the CPU 27 waits until an interrupt by the interrupt input terminal C is generated (step S2). When an interrupt by the interrupt input terminal C is generated, the CPU 27 adds one to the value of the number Nh of times of interrupt generation (step S3).

Next, the CPU 27 checks whether an interrupt by the interrupt input terminal A has been generated (step S4). If an interrupt by the interrupt input terminal A has been generated, the CPU 27 adds one to the value of the number Na of times of interrupt generation (step S5).

Next, the CPU 27 checks whether an interrupt by the interrupt input terminal B has been generated (step S6). If an interrupt by the interrupt input terminal B has been generated, the CPU 27 adds one to the value of the number Nb of times of interrupt generation (step S7).

Next, the CPU 27 checks the value of the number Nh of times of interrupt generation (step S8). If the value of the number Nh of times of interrupt generation has not become 100, the CPU 27 returns the processing to the step S2 and repeatedly carries out the processing from the step S2 to the step S8 until the number Nh of times of interrupt generation = 100 is obtained. If the value of the number Nh of times of interrupt generation has become 100, the CPU 27 clears the value of the number Nh of times of interrupt generation (Nh = 0) (step S9).

Next, the CPU 27 checks the values of the number Na of times of interrupt generation and the number Nb of times of interrupt generation and determines whether or not the sum of the number Na of times of interrupt generation and the number Nb of times of interrupt generation is equal to or larger than a predetermined value (here, 50) (step S11 in FIG. 6). If the sum of the number Na of times of interrupt generation and the number Nb of times of interrupt generation does not reach 50 as the predetermined value here, the CPU 27 clears the values of the number Na of times of interrupt generation and the number Nb of times of interrupt generation (Na = 0, Nb = 0) (step S12) and then returns the processing to the step S2. Furthermore, if the sum of the number Na of times of interrupt generation and the number Nb of times of interrupt generation is equal to or larger than 50 as the predetermined value, the CPU 27 determines that the timing of the pulse output by the pulse generating circuit 14 roughly corresponds with the timing of the noise detected by the noise detecting circuit 13, and shifts the processing to the next step S 13 for carrying out detailed control of the phase.

The situation in which the sum of the number Na of times of interrupt generation and the number Nb of times of interrupt generation does not reach the predetermined value in the above-described step S 11 occurs only immediately after the power activation. In the steady state, the sum of the number Na of times of interrupt generation and the number Nb of times of interrupt generation always becomes equal to or larger than the predetermined value. Furthermore, it is preferable to decide the predetermined value in such a manner that the sum surely becomes equal to or larger than the predetermined value in the steady state. This predetermined value is decided based on the deviation between the cycle of generation of the pulse output by the pulse generating circuit 14 normally (when phase control to be described later is not carried out) and the cycle of the horizontal synchronizing pulse of the horizontal synchronous frequency of the LCD panel, and how accurately the noise detected by the noise detecting circuit 13 corresponds to the timing of the horizontal synchronizing pulse of the LCD panel, and so forth. That is, the pulse output by the pulse generating circuit 14 greatly deviates from the pulse output by the noise detecting circuit 13 immediately after the power activation. However, with the elapse of time, the output no from the noise detecting circuit 13 comes to fall within the pulse width period of the pulse h output from the pulse generating circuit 14 sooner or later as shown in FIG. 4(C).

If the sum of the number Na of times of interrupt generation and the number Nb of times of interrupt generation is the predetermined value in the step S11, the CPU 27 compares the values of the number Na of times of interrupt generation and the number Nb of times of interrupt generation and carries out the phase control. First, in the step S 13, the CPU 27 determines whether or not the number Na of times of interrupt generation is sufficiently larger (here, twice or larger) compared with the number Nb of times of interrupt generation.

If determining in the step S 13 that the number Na of times of interrupt generation is sufficiently larger compared with the number Nb of times of interrupt generation, the CPU 27 sends out the control signal m to control the pulse generating circuit 14 so as to slightly shorten the cycle of the pulse h output from the pulse generating circuit 14 only once. Furthermore, the CPU 27 clears the values of the number Na of times of interrupt generation and the number Nb of times of interrupt generation (step S 14). Then, the CPU 27 returns the processing to the step S2.

If determining in the step S 13 that the number Na of times of interrupt generation is not larger compared with the number Nb of times of interrupt generation, conversely the CPU 27 determines whether or not the number Nb of times of interrupt generation is sufficiently larger (here, twice or larger) compared with the number Na of times of interrupt generation (step S 15). If determining that the number Nb of times of interrupt generation is sufficiently larger compared with the number Na of times of interrupt generation, the CPU 27 sends out the control signal m to control the pulse generating circuit 14 so as to slightly lengthen the cycle of the pulse generating circuit 14 only once. Furthermore, the CPU 27 clears the values of the number Na of times of interrupt generation and the number Nb of times of interrupt generation (step S16). Then, the CPU 27 returns the processing to the step S2.

If the CPU 27 determines in the step S15 that the number Nb of times of interrupt generation is not larger compared with the number Na of times of interrupt generation, i.e. if the CPU 27 determines that the ratio is low (here, twice or lower) through the comparison between the number Na of times of interrupt generation and the number Nb of times of interrupt generation, the pulse of the output no from the noise detecting circuit 13 exists just around the center of the pulse width period of the output pulse h from the pulse generating circuit 14. Thus, the CPU 27 does not carry out the phase control and clears the values of the number Na of times of interrupt generation and the number Nb of times of interrupt generation (step S 17). Then, the CPU 27 returns the processing to the step S2.

The processing of the above-described step S13 and step S 15 will be described in a little more detail. That the number Na of times of interrupt generation is equal to or larger than twice the number Nb of times of interrupt generation in the step S13 indicates that the frequency at which the state of FIG. 4(B) is obtained is high. Thus, the CPU 27 slightly shortens the cycle of the pulse h output from the pulse generating circuit 14 only once to advance the phase of the pulse h and thereby carries out control to equalize the values of the number Na of times of interrupt generation and the number Nb of times of interrupt generation. Furthermore, that the number Nb of times of interrupt generation is equal to or larger than twice the number Na of times of interrupt generation in the step S 15 indicates that the frequency at which the state of FIG. 4(C) is obtained is high. Thus, the CPU 27 slightly lengthens the cycle of the pulse h output from the pulse generating circuit 14 only once to retard the phase of the pulse h and thereby carries out control to equalize the values of the number Na of times of interrupt generation and the number Nb of times of interrupt generation.

It is preferable that the ratio with which the number Na of times of interrupt generation and the number Nb of times of interrupt generation are compared and the determination is carried out in the step S 13 and the step S 15 be decided corresponding to the fineness of the time when the cycle of the pulse h output from the above-described pulse generating circuit 14 is slightly adjusted. Specifically, when the time in the above-described adjustment is slight, the determination ratio between the number Na of times of interrupt generation and the number Nb of times of interrupt generation may be set small. However, when the adjustment time is rough, the determination ratio between the number Na of times of interrupt generation and the number Nb of times of interrupt generation needs to be set large.

It goes without saying that the MCU 26 may be used in place of the CPU 27.

### Another Example of Phase Control Circuit

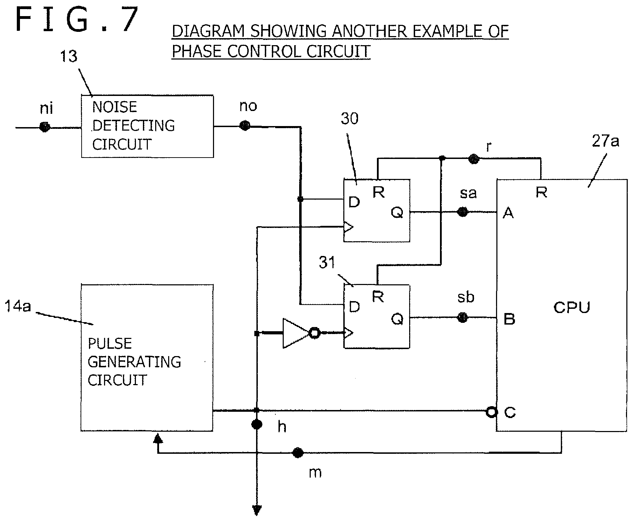

FIG. 7 is a diagram showing another example of the phase control circuit and a part having the same configuration as FIG. 3 is shown with the same numeral. Numeral 27a denotes a CPU and numerals 30 and 31 denote flip-flops.

The output signal no from the noise detecting circuit 13 is supplied in common to data terminals D of the flip-flop 30 and the flip-flop 31. A pulse h from a pulse generating circuit 14a is supplied to the clock input of the flip-flop 30 and the inverted signal of the pulse h from the pulse generating circuit 14a is supplied to the clock input of the flip-flop 31.

That is, the flip-flop 30 holds the value of the output no from the noise detecting circuit 13 at the rising edge of the pulse h and supplies the result thereof as a signal sa to an input terminal A of the CPU 27a. Furthermore, the flip-flop 31 holds the value of the output no from the noise detecting circuit 13 at the falling edge of the pulse h and supplies the result thereof as a signal sb to an input terminal B of the CPU 27a.

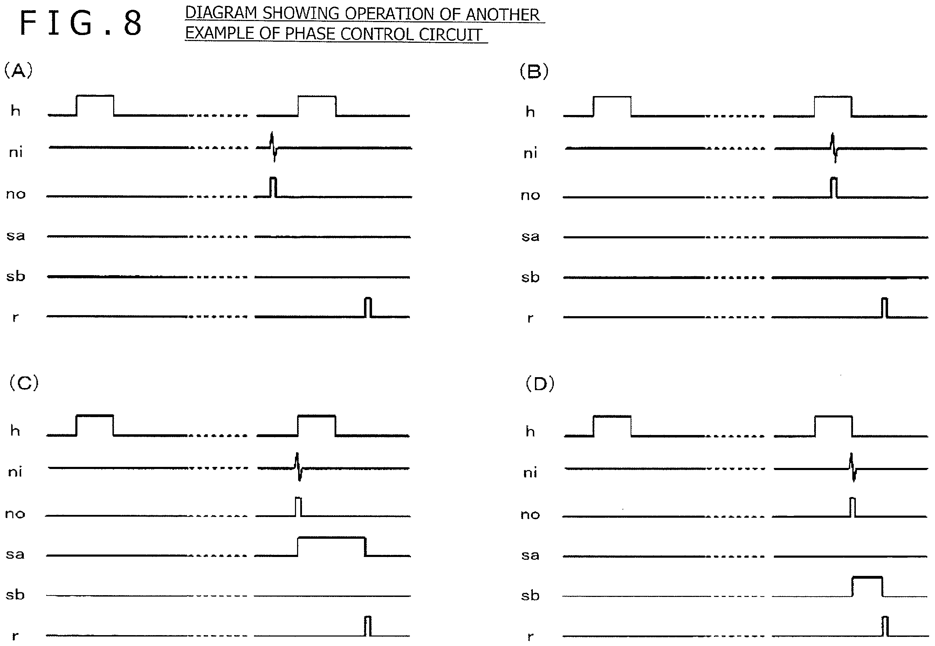

Furthermore, the pulse h from the pulse generating circuit 14a is input to an interrupt input terminal C of the CPU 27a and predetermined interrupt processing operation is carried out at the falling edge of the pulse h. FIG. 8 shows examples of the signal waveforms of the respective parts shown in the phase control circuit of FIG. 7.

FIG. 8(A) is the case in which the output signal no from the noise detecting circuit 13 appears in a pulse width period other than the output pulse h from the pulse generating circuit 14a. The state of FIG. 8(A) appears mainly before the operation of the phase control circuit becomes the steady state immediately after the position detecting device is activated.

FIG. 8(B) is the case in which the output signal no from the noise detecting circuit 13 appears just around the middle of the pulse width period of the pulse h from the pulse generating circuit 14a. In the steady state, the operation shown in FIG. 8(B) frequently appears.

FIG. 8(C) shows the case in which the output signal no from the noise detecting circuit 13 becomes the high level just at the timing of the rising edge of the pulse h from the pulse generating circuit 14a. FIG. 8(D) shows the case in which the output signal no from the noise detecting circuit 13 becomes the high level just at the timing of the falling edge of the pulse h from the pulse generating circuit 14a.

Also in this phase control circuit of the example of FIG. 7, the CPU 27a controls the phase of the pulse h output by the pulse generating circuit 14 in such a manner that the frequency at which the output signal no (noise detection information) from the noise detecting circuit 13 is output in a predetermined time synchronizing with the pulse h output by the pulse generating circuit 14, in this example, in the pulse width period of the pulse h, becomes equal to or higher than a certain value.

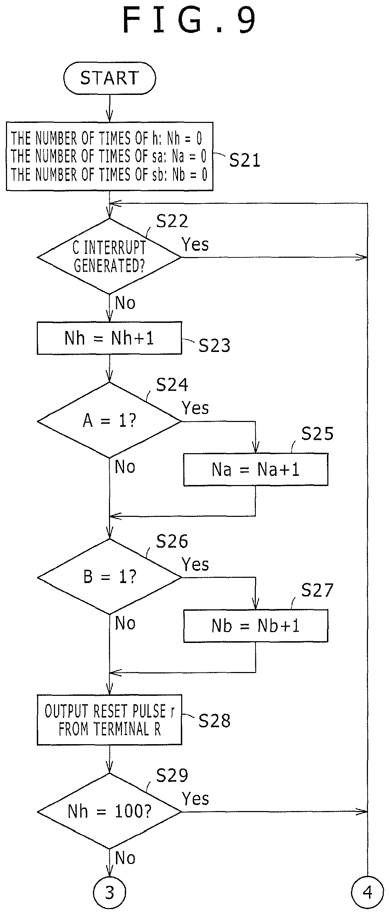

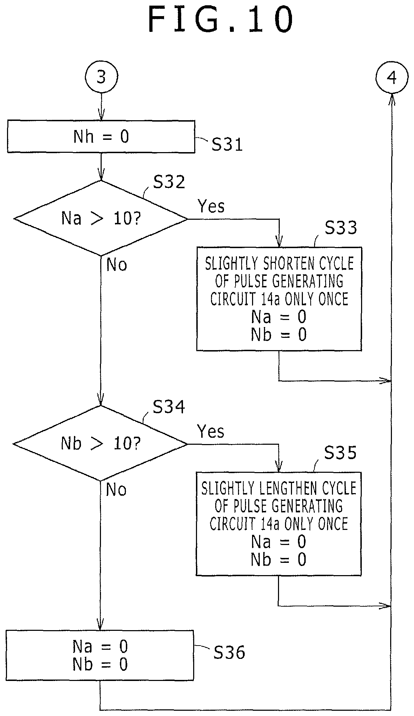

FIG. 9 and FIG. 10, which is a continuation of FIG. 9, show a flowchart of a program in the CPU 27a. When the position detecting device is powered up, the CPU 27a clears all of the values of the number Nh of times of interrupt generation by the interrupt input terminal C, the number Na of times the input terminal A is at the high level at the time of interrupt generation of the interrupt input terminal C, and the number Nb of times the input terminal B is at the high level at the time of interrupt generation of the interrupt input terminal C (step S21).

Next, the CPU 27a waits until an interrupt by the interrupt input terminal C is generated (step S22). When an interrupt by the interrupt input terminal C is generated, the CPU 27a adds one to the value of the number Nh of times of interrupt generation and advances the processing to the next step 24 (step S23).

Next, the CPU 27a checks whether the input terminal A is at the high level (step S24). If the input terminal A is at the high level, the CPU 27a adds one to the value of the number Na of times (step S25).

Next, the CPU 27a checks whether the input terminal B is at the high level (step S26). If the input terminal B is at the high level, the CPU 27a adds one to the value of the number Nb of times (step S27).

After ending the processing to the step S26 or the step S27, the CPU 27a outputs a reset pulse r from a terminal R (step S28). The outputs (Qa and Qb) of the flip-flop 30 and the flip-flop 31 are cleared by this reset pulse r.

Next, the CPU 27a checks the value of the number Nh of times of interrupt generation and determines whether or not the value of the number Nh of times of interrupt generation has become 100 (step S29). If the value of the number Nh of times of interrupt generation has not become 100, the CPU 27a returns the processing to the step S22 and repeatedly carries out the processing from the step S22 to the step S29 until the number Nh of times of interrupt generation = 100 is obtained.

If determining in the step S29 that the value of the number Nh of times of interrupt generation has become 100, the CPU 27a clears the value of the number Nh of times of interrupt generation (step S31 in FIG. 10).

Next, the CPU 27a checks the values the number Na of times and the number Nb of times and carries out the phase control. First, the CPU 27a determines whether or not the number Na of times is equal to or larger than a predetermined value (here, 10) (step S32). If the number Na of times is equal to or larger than the predetermined value (here, 10), the CPU 27a sends out the control signal m to control the pulse generating circuit 14a so as to slightly shorten the cycle of the pulse h from the pulse generating circuit 14a only once. Furthermore, the CPU 27a clears the values of the number Na of times and the number Nb of times (step S33). Then, the CPU 27a returns the processing to the step 22.

Next, if determining in the step S32 that the number Na of times is equal to or smaller than the predetermined value (here, 10), the CPU 27a determines whether or not the number Nb of times is equal to or larger than a predetermined value (here, 10) (step S34). If the number Nb of times is equal to or larger than the predetermined value (here, 10), the CPU 27a sends out the control signal m to control the pulse generating circuit 14a so as to slightly lengthen the cycle of the pulse h from the pulse generating circuit 14a only once. Furthermore, the CPU 27a clears the values of the number Na of times and the number Nb of times (step S35). Then, the CPU 27a returns the processing to the step 22.

The processing of the above-described step S32 to step S35 will be described in a little more detail. That the number Na of times is equal to or larger than the predetermined number (here, 10) in the step S32 indicates that the phase of the pulse h output by the pulse generating circuit 14a is retarded compared with the timing of the output pulse no from the noise detecting circuit 13. Therefore, the state of the operation can be brought closer to the state of FIG. 8(B) by slightly shortening the cycle of the pulse h output by the pulse generating circuit 14a only once to advance the phase of the output pulse h.

Furthermore, that the number Nb of times is equal to or larger than the predetermined number (here, 10) in the step S34 indicates that the phase of the pulse h output by the pulse generating circuit 14a is advanced compared with the timing of the output pulse no from the noise detecting circuit 13. Therefore, the state of the operation can be brought closer to the state of FIG. 8(B) by slightly lengthening the cycle of the pulse output by the pulse generating circuit 14a only once to retard the phase of the output pulse h.

Although the value with which the determination is carried out based on the number Na of times and the number Nb of times in the step S32 and the step S34 is set to 10 here, it is preferable to decide this value corresponding to the fineness of the time when the cycle of the pulse h output by the above-described pulse generating circuit 14a is slightly adjusted, the variation and frequency of the level of the noise emitted by the LCD panel, and so forth.

In the present embodiment, the processing is executed based on the frequencies of the output of the above-described pa, sa, pb, and sb in the period during which the pulse generating circuit 14 and the pulse generating circuit 14a output the pulse 100 times. However, this number of times may be another number of times other than 100 times.

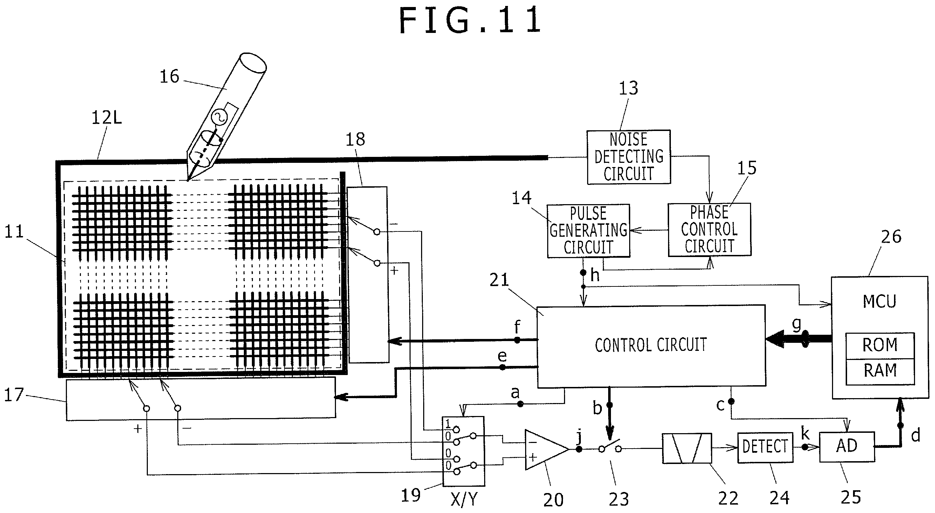

In the present embodiment, the noise sensor is formed by the noise detecting electrode 12. However, for example as shown in FIG. 11, the noise sensor may be formed by a loop-shaped coil 12L surrounding the transparent sensor 11 and noise may be detected by this coil 12L.

In the present embodiment, the position indicated by the stylus 16 is obtained by capacitive coupling with the transparent sensor 11. However, the embodiment can be applied also to the case in which a transparent sensor is provided with a loop coil and a stylus is also provided with a coil and the position indicated by the stylus is obtained by electromagnetic induction.

In the present embodiment, the control circuit 21 is for avoiding the concentration of processing of the microprocessor 26 and the control circuit 21 may be absent.

In the present embodiment, the coordinate detection on the X-axis side and the coordinate detection on the Y-axis side are carried out with switching by the switching circuit 19. However, a differential amplification circuit, an AD conversion circuit, and so forth may be provided on the X-axis side and the Y-axis side severally and reception processing may be executed simultaneously.

It goes without saying that the MCU 26 may be used in place of the CPU 27a in the above-described embodiment.

### Second Embodiment

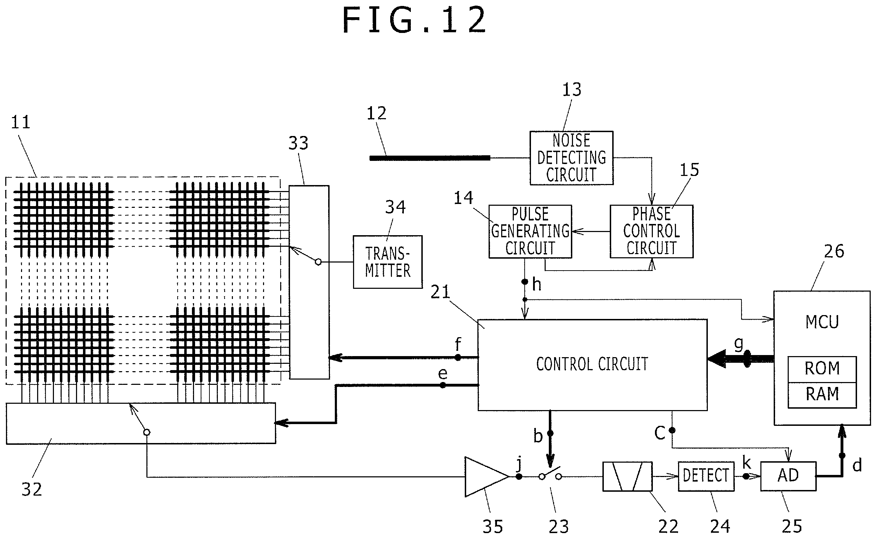

FIG. 12 is a configuration diagram of a position detecting device according to a second embodiment of the present invention and shows an example of the case in which the position touched by a finger is detected and input. In FIG. 12, the same constituent elements as FIG. 1 are shown with the same numerals. Specifically, numeral 11 denotes a transparent sensor, 12 denotes a noise detecting electrode, 13 denotes a noise detecting circuit, 14 denotes a pulse generating circuit, 15 denotes a phase control circuit, 21 denotes a control circuit, 22 denotes a band-pass filter circuit, 23 denotes a switch, 24 denotes a detection circuit, 25 denotes an AD conversion circuit, and 26 denotes a microprocessor.

Numeral 32 denotes an X selecting circuit that selects one electrode from the X electrodes of the transparent sensor 11, and numeral 33 denotes a Y selecting circuit that selects one electrode from the Y electrodes of the transparent sensor 11. Numeral 34 denotes a transmitter that generates and outputs a signal of a certain frequency. The output signal of the transmitter 34 is supplied to the Y selecting circuit 33 to drive the Y electrode of the transparent sensor 11 selected by the Y selecting circuit 33.

Numeral 35 denotes an amplification circuit and it is connected to the X selecting circuit 32 and amplifies a signal generated in the X electrode of the transparent sensor 11 selected by the X selecting circuit 32.

This second embodiment is a multi-touch sensor that obtains the position touched by a finger by utilizing the fact that the coupling capacitance at the cross point of the X electrode and the Y electrode changes when the finger approaches. Also in this kind of position detecting device, conventionally there is a problem that noise from a display device enters the position detecting device and therefore the drive voltage needs to be set high, and so forth.

Also in the present embodiment, the signal waveforms shown at the respective parts in FIG. 12 are the same as FIG. 2, and the signal detected from the X electrode of the transparent sensor 11 can be detected with avoidance of the period in which strong noise from the display device is generated. Thus, the touch position can be stably detected without setting the output voltage of the transmitter 34 very high.

### Effect of Embodiments

According to the present invention, noise generated by the display device is detected and the pulse generating circuit that operates at a cycle corresponding to the horizontal synchronous frequency of the display device known in advance is provided. Furthermore, control is carried out to cause the timing of the pulse output by the pulse generating circuit to correspond with the timing of the noise generated by the display device, and signal detection is carried out in synchronization with the pulse output by the pulse generating circuit. Therefore, the coordinate position by a stylus or a finger can be accurately detected and input without being affected by the noise generated by the display device.

### Other Embodiments

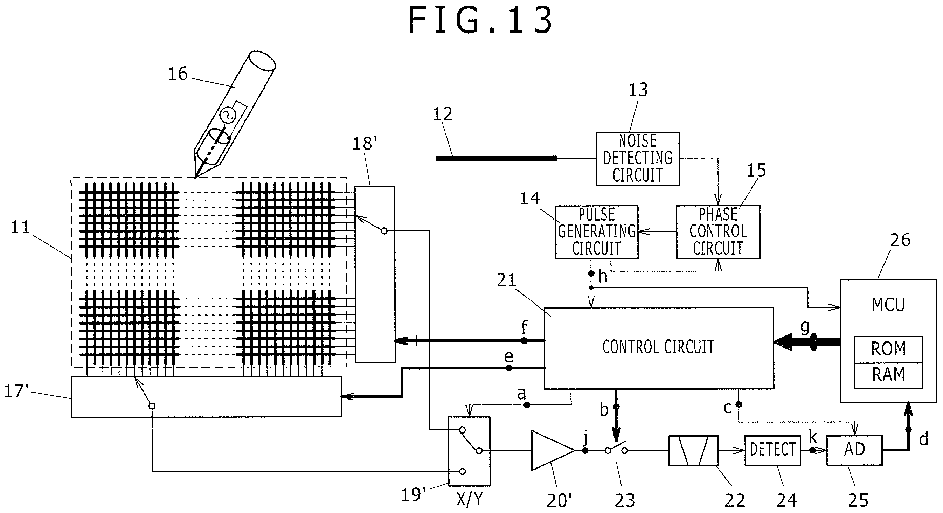

In the above-described first embodiment, noise superimposed on two receiving electrodes similarly is canceled by using the differential amplification circuit 20. However, the signal is not supplied to the band-pass filter circuit 22 by turning off the switch 23 in the period in which the display device emits the noise. Therefore, as shown in FIG. 13, the position detecting device may be configured to use an amplification circuit 20' without using the differential amplification circuit 17. In this case, as shown in FIG. 13, an X selecting circuit 17' and a Y selecting circuit 18' have such a configuration as to select one X electrode and one Y electrode, respectively. Furthermore, a switching circuit 19' has such a configuration as to select either the one X electrode selected by the X selecting circuit 17' or the one Y electrode selected by the Y selecting circuit 18'.

Furthermore, in the above-described embodiment, the case of detection of the position indicated by a stylus (position indicator) of the capacitive system is described. However, this invention can be applied also in a position detecting device that detects the position indicated by a stylus (position indicator) of the electromagnetic induction system.

### Configuration Examples of Noise Sensor

As explained in the above-described embodiments, the noise sensors 12 and 12L are disposed at the periphery of the LCD panel disposed integrally with the transparent sensor. Specific configuration examples of the noise sensor and examples of the placement position will be described below.

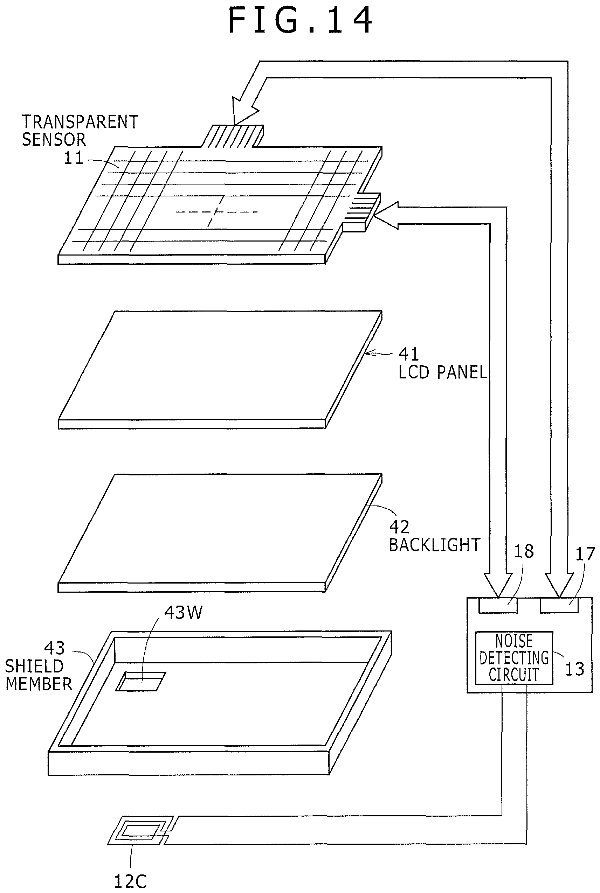

FIG. 14 is a diagram showing a specific configuration example of a liquid crystal unit including the transparent sensor 11 and an LCD panel 41. This liquid crystal unit forms also a position detecting device unit. As shown in FIG. 14, the LCD panel 41 is disposed under the transparent sensor 11 and a backlight 42 is disposed under the LCD panel 41, so that the liquid crystal unit is configured. The liquid crystal unit of this example is for portable equipment such as a mobile phone terminal called a smartphone for example.

Furthermore, in the liquid crystal unit of this example, the transparent sensor 11, the LCD panel 41, and the backlight 42 forming the liquid crystal unit are enclosed by a shield member 43 formed of an electrically-conductive member such as a copper foil and an aluminum foil for example. This shield member 43 plays a role in blocking noise so that the noise generated from the LCD panel 41 may be prevented from affecting a circuit part (diagrammatic representation is omitted) of the portable equipment main body. Furthermore, against heat generation of the backlight 42, the shield member 43 is also used to block heat to the liquid crystal screen of the LCD panel 41 and cause the circuit part of the portable equipment main body to dissipate heat.

In the case of the configuration of the liquid crystal unit (position detecting device unit) in which the shield member 43 like this example of FIG. 14 does not exist, the noise sensor can be disposed e.g. by being laid around the LCD panel as in the embodiments shown in FIG. 13 and so forth. However, in the case of the structure in which the LCD panel 41, the transparent sensor 11, and the backlight 42 forming the liquid crystal unit are encompassed by the shield member 43 as shown in FIG. 14, the liquid crystal unit is configured to keep the noise to the external from leaking by the shield member 43. Thus, contrivance is necessary in the configuration of disposing the noise sensor.

In this example, as shown in FIG. 14, an opening 43W is formed at one part of the bottom surface part of the shield member 43. A noise sensor 12C of this example is disposed on the outside surface of the shield member 43 (back side of the bottom surface) in such a manner as to be capable of detecting noise discharged from the LCD panel 41 through this opening 43W.

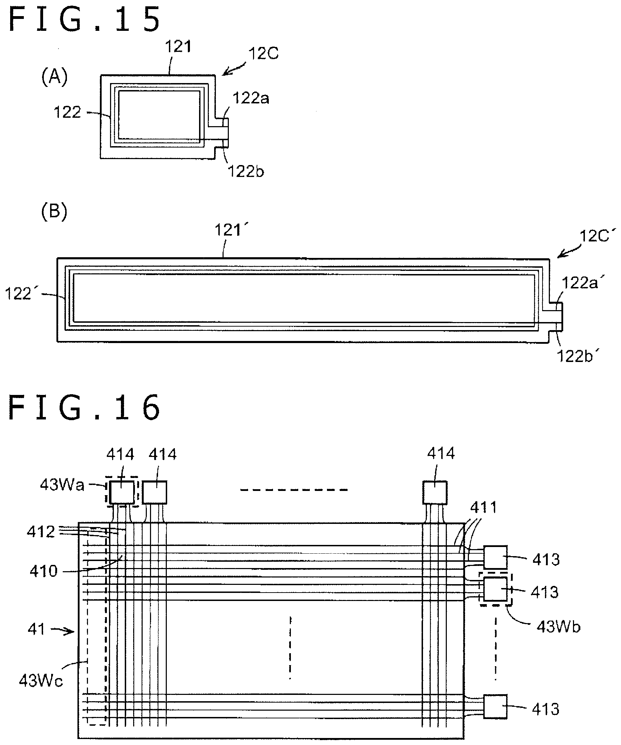

FIG. 15(A) shows a configuration example of the noise sensor 12C of this example. The noise sensor 12C of this example is configured by forming a coil pattern (antenna coil) 122 of plural turns as a conductor pattern on a flexible board 121 formed of a film-shaped insulator. Furthermore, according to the shape of the opening 43W, the coil pattern 122 is formed on the flexible board 121 with a size that allows part or all of this coil pattern 122 can face the inside of the shield member 43 from this opening 43 W.

Furthermore, the flexible board 121 is stuck and attached to the outside surface of the shield member 43 (back side of the bottom surface) in the state in which part or all of the coil pattern 122 can face the inside of the shield member 43 from the opening 43 W. Therefore, the opening 43W of the shield member 43 is sealed by the flexible board 121 of the noise sensor 12C. Accordingly, by this noise sensor 12C, noise that leaks to the external through the opening 43W is alleviated.

One end 122a and the other end 122b of the coil pattern 122 of the noise sensor 12C are connected to the noise detecting circuit 13 in the internal circuit configuration of the position detecting device shown in FIG. 1 for example, as shown in FIG. 14.

As described above, in this example of FIG. 14, the opening 43W is made at part of the shield member 43 and the noise sensor 12C is stuck to the part of this opening 43W. This makes it possible to partly release the noise blocking by the shield member 43 and detect noise by the noise sensor 12C.

In this case, it is ideal to set the position in the shield member 43 at which the noise sensor 12C is stuck, i.e. the position of the opening 43W, to a position that enables efficient detection of the noise from the LCD panel 41 by the noise sensor 12C.

In a well-known thin-film transistor (TFT) liquid crystal device for example, the LCD panel 41 is configured as follows. As shown in FIG. 16, for liquid crystal cells 410 forming a respective one of vertical and horizontal plural pixels, field effect transistors (FETs; their diagrammatic representation is omitted) that drive a respective one of these liquid crystal cells 410 are disposed. Furthermore, in the TFT liquid crystal device, plural bus lines along the horizontal direction (gate electrode lines) 411 and plural bus lines along the vertical direction (source electrode lines) 412 are disposed. The gates of the FETs of plural liquid crystal cells on one row along the horizontal direction are connected to one gate electrode line 411 in common, and the sources of the FETs of plural liquid crystal cells on one column along the vertical direction are connected to one source electrode line 412 in common. An electrode and a capacitor of the liquid crystal cell 410 are connected to the drain of each FET.

For example, in a TFT liquid crystal device having pixels of 1,980 × 1,020 dots, the number of source electrode lines 412 is 1,980 and the number of gate electrode lines 411 is 1,020. Furthermore, in the TFT liquid crystal device, by voltage applied to the gate electrode line 411, all FETs of one row connected to the gate electrode line 411 are turned on and current flows between the source and the drain. In addition, each voltage applied to the source electrode line 412 at this time is applied to the liquid crystal electrode and a charge according to the voltage is accumulated in the capacitor.

The voltage application to the gate electrode line 411 is switched every one horizontal period by gate driver integrated circuits (ICs) 413. To each of the source electrode lines 412, a voltage according to the density of a respective one of the pixels is applied from a source driver IC 414. By the repetition of this, in the TFT liquid crystal device, an image is displayed on its display screen. In the example of FIG. 16, one gate driver IC 413 is provided per plural gate electrode lines 411. In addition, one source driver IC 414 is provided per plural source electrode lines 412.

The gate driver ICs 413 generate noise synchronizing with the horizontal synchronizing signal because switching the gate electrode line 411 every one horizontal period. Furthermore, the source driver ICs 414 also generate noise synchronizing with the horizontal synchronizing signal because operating to supply the voltage of a different pixel every one horizontal period.

Therefore, as parts where the noise from the LCD panel 41 is easily detected, the vicinity of the gate driver IC 413 or the source driver IC 414, an area that can include all or part of the gate electrode lines 411, an area that can include all or part of the source electrode lines 412, and so forth are conceivable. Therefore, the noise can be efficiently detected by making the opening 43 W in the shield member 43 and disposing the noise sensor at these parts where the noise is easily detected.

The example of FIG. 14 is the case in which the opening 43 W is made near one source driver IC 414 as shown by surrounding by a dotted line 43Wa in FIG. 16. As shown by surrounding by a dotted line 43Wb in FIG. 16, the opening 43W may be formed near one gate driver IC 413 and the noise sensor 12C may be stuck to the outside of the shield member 43 to seal this opening 43W.

The opening 43 W may be formed to include not the vicinity of one of the gate driver ICs 413 or the source driver ICs 414 but the vicinity of all gate driver ICs 413 or all source driver ICs 414, of course.

Furthermore, for example, in the case in which the peripheral part of the LCD panel 41 is fixed by a metal bezel, the gate driver ICs 413 and the source driver ICs 414 disposed around the LCD panel 41 are covered by the metal bezel. In this case, noise cannot be detected although the noise sensor is disposed near these gate driver ICs 413 or source driver ICs 414.

In such a case, as shown by a dotted line 43Wc in FIG. 16, the opening 43W is made in the shield member 43 corresponding to an area including the whole of the plural gate electrode lines 411 and the noise sensor having a shape according to the opening 43W is disposed. This allows detection of noise. FIG. 15(B) shows an example of a noise sensor 12C' provided for the opening 43W corresponding to the area including the whole of the plural gate electrode lines 411 as shown by the dotted line 43Wc.

Specifically, in the noise sensor 12C' of FIG. 15(B), a coil pattern 122' that is formed to cover the area including the whole of the plural gate electrode lines 411 and is formed of plural turns is formed on a flexible board 121' larger in size than or comparable to the opening 43W corresponding to the area including the whole of the plural gate electrode lines 411. Furthermore, one end 122a' and the other end 122b' of the coil pattern 122' are connected to the noise detecting circuit 13. Also in this case, the coil pattern 122' is so configured that part or all thereof is exposed to the inside of the shield member 43 through the opening 43W.

It is also possible to detect noise by making the opening 43W in the shield member 43 corresponding to the area including the whole of the plural source electrode lines 412 and disposing the noise sensor having a shape according to the opening 43W. Furthermore, it goes without saying that the position of the noise sensor is not limited to the above-described positions and an opening is made in the shield member 43 at the part where noise is generated from the LCD panel 41 most readily and the noise sensor is stuck to the part.

Furthermore, in the above-described example, the noise sensor is provided outside the bottom surface part of the shield member 43. However, by making an opening in the wall part around the bottom surface part of the shield member 43, the noise sensor may be provided on the wall part around the bottom surface part of this shield member 43.

Moreover, in the case of the noise sensor in which the flexible board 121 or 121' and the coil pattern 122 or 122' are made of transparent materials, the noise sensor may be disposed not on the back surface side of the LCD panel 41 or on the outside of the bottom surface of the shield member 43 but on the front surface of the LCD panel 41.

### Description of Reference Symbols

- 11: Transparent sensor
- 12: Noise detecting electrode
- 13: Noise detecting circuit
- 14, 14a: Pulse generating circuit
- 15: Phase control circuit
- 16: Stylus
- 17, 32: X selecting circuit
- 18, 33: Y selecting circuit
- 19: Switching circuit
- 20: Differential amplification circuit
- 21: Control circuit
- 22: Band-pass filter circuit
- 23: Switch
- 24: Detection circuit
- 25: AD conversion circuit
- 26: Microprocessor
- 27, 27a: CPU
- 28, 29: AND gate
- 30, 31: Flip-flop
- 34: Transmitter
- 35: Amplification circuit
- 41: LCD panel
- 43: Shield member
- 43W: Opening
- 12C: Noise sensor

## Claims

1. A position detecting device that detects a position indicated by a finger or a stylus over a display device capable of refreshing displaying at every certain cycle, the position detecting device comprising:
a noise sensor disposed around the display device or a drive circuit of the display device;
a noise detecting circuit that outputs noise detection information when noise input to the noise sensor is equal to or higher than a predetermined level;
a pulse generating circuit that generates a pulse at the same cycle as a known cycle of a horizontal synchronizing pulse of the display device;
phase control means that controls a phase of the pulse output by the pulse generating circuit in such a manner that the noise detection information from the noise detecting circuit is output in a predetermined time synchronizing with the pulse output by the pulse generating circuit; and
a receiving circuit that receives a signal by the finger or the stylus in synchronization with timing of the pulse output by the pulse generating circuit.

2. The position detecting device according to claim 1, **characterized in that** the phase control means controls the phase of the pulse output by the pulse generating circuit in such a manner that frequency at which the noise detection information from the noise detecting circuit is output in the predetermined time synchronizing with the pulse output by the pulse generating circuit becomes equal to or higher than a certain value.

3. The position detecting device according to claim 2, **characterized in that** the phase control means outputs advancing information when timing at which the noise detection information from the noise detecting circuit is output appears earlier than the timing of the pulse output by the pulse generating circuit by a difference within a certain time, and outputs retarding information when the timing at which the noise detection information from the noise detecting circuit is output appears later than the timing of the pulse output by the pulse generating circuit by a difference within a certain time, and
the phase control means adjusts a cycle of the pulse output by the pulse generating circuit to a slightly-shorter cycle if frequency of appearance of the advancing information is higher than frequency of appearance of the retarding information, and adjusts the cycle of the pulse output by the pulse generating circuit to a slightly-longer cycle if the frequency of appearance of the retarding information is higher than the frequency of appearance of the advancing information.

4. The position detecting device according to claim 3, **characterized in that**
the phase control means divides the predetermined time into two periods of a former-half period and a latter-half period, and
the phase control means outputs the advancing information when the noise detection information from the noise detecting circuit is output in the former-half period, and outputs the retarding information when the noise detection information from the noise detecting circuit is output in the latter-half period.

5. The position detecting device according to claim 3, **characterized in that**
the pulse generating circuit outputs a pulse with the same time width at the same timing as the predetermined time, and
the phase control means outputs the advancing information when the noise detection information from the noise detecting circuit appears at a rising edge of the pulse output by the pulse generating circuit, and outputs the retarding information when the noise detection information from the noise detecting circuit appears at a falling edge of the pulse output by the pulse generating circuit.

6. The position detecting device according to claim 1, **characterized in that**
the display device and the drive circuit of the display device are covered by a shield member, and
the noise sensor is provided outside the shield member to detect noise through an opening made in the shield member.

7. The position detecting device according to claim 6, **characterized in that**
the opening is made around the drive circuit of the display device, and
the noise sensor detects noise from the drive circuit of the display device.

8. The position detecting device according to claim 6, **characterized in that**
the opening is made corresponding to an area including all or part of electrode lines along horizontal direction or vertical direction of the display device, and
the noise sensor detects noise from the electrode lines of the display device.
